(19) **Europäisches Patentamt**

**European Patent Office**

**Office européen des brevets**

(11) **EP 0 976 332 A2**

(12) **EUROPÄISCHE PATENTANMELDUNG**

(43) Veröffentlichungstag:
02.02.2000 Patentblatt 2000/05

(51) Int. Cl.⁷: **A23J 7/00**, A23G 9/00,
A23G 9/02

(21) Anmeldenummer: 99112881.0

(22) Anmeldetag: 03.07.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.07.1998 DE 19833574**

(71) Anmelder: **Lucas Meyer GmbH & Co**
**20539 Hamburg 28 (DE)**

(72) Erfinder:
• **Werran, Richard,**
**c/o Lucas Meyer UK Ltd.**
**Deeside, Clwyd CH 5 2NU (GB)**

• **Postels, Fiona,**
**c/o Reaseheath College**
**Nantwich, Cheshire CW5 6DF (GB)**
• **Schmitt, Heidi,**
**c/o Lucas Meyer GmbH & Co.**
**20539 Hamburg (DE)**

(74) Vertreter:
**DIEHL GLAESER HILTL & PARTNER**
**Patentanwälte**
**Königstrasse 28**
**22767 Hamburg (DE)**

(54) **Lecithin in Speiseeis**

(57) Die Erfindung bezieht sich auf die Verwendung eines entölten enzymatisch hydrolisierten Lecithins mit erhöhtem Lyso-Phospholipidgehalt in Speiseeis als Stabilisator und Emulgator mit anderen oder ohne andere Stabilisatoren, insbesondere Guarkernmehl, Johannisbrotmehl und/oder Carrageen.

EP 0 976 332 A2

**Beschreibung**

Speiseeis ist ein disperses Mehrphasensystem, bei dem etwa die Hälfte des Volumens aus feinverteilter Luft besteht.

Bestandteile diese komplexen Lebensmittelsystemes sind:

äußere Phase: wäßrige Zuckerlösung
innere Phase: Proteine (kolloidal gelöst)
Fett-Tröpfchen (emulgiert)
Fettkristalle (supendiert)
Eiskristalle (suspendiert)
Gasbläschen (dispergiert)

Die Herstellung von Eiscreme durchläuft im wesentlichen 5 Verfahrensschritte:

1. Mischen und Erhitzen der Zutaten (Pasteurisation)
2. Homogenisieren des Eiscrememixes
3. Reifen des Mixes (bei ca. 5°C, bis zum 24 Stunden)
4. Aufschäumen und Frieren des Mixes im Freezer
5. Aushärtungs- und Lagerungsprozeß

Um solch ein komplexes Mehrphasensystem homogen und stabil produzieren und lagern zu können, sind Emulgatoren und Stabilisatoren unverzichtbar.

Funktion von Stabilisatoren in Eiscreme:

Sie verbessern das Gefüge, erhöhen die Festigkeit und die Viskosität (Texturgebung). Dadurch wird die Diffusionsgeschwindigkeit von Wasser, Salzen etc reduziert. Somit wird die Bildung und Stabilität kleiner Kristalle gefördert.
Bei zu geringem Einsatz von Hydrokolloiden neigt das Eis beim Verzehr zum Tropfen, während es gefroren eine zu krümelige Struktur aufweist. Ferner werden Luftblasen ungleich dispergiert und es besteht die Gefahr des Ausbutterns im Freezer. Andererseits führt ein zu hoher Einsatz von Hydrokolloiden zu einer gummiartigen Struktur.

Funktion von Emulgatoren in Eiscreme:

Emulgatoren beeinflussen ebenfalls Gefüge und Textur der Eiscreme. Sie halten die o/w-Emulsion und den Verteilungszustand möglichst kleiner Fettkügelchen sowie Luftbläschen aufrecht. Sie verhindern somit ein Ausklumpen/Ausbuttern. Die homogene Feinverteilung führt zu einer einheitlichen Textur der Eiscreme. Zudem reduzieren Emulgatoren die Aufschlagzeit und lassen die Eiscreme trocken und steif erscheinen. Dieser Eindruck entsteht, da die große Anzahl an kleinen Luftbläschen eine enorme Oberflächenvergrößerung bedeutet. Das in der Eiscreme vorhandene Wasser kann nun über eine sehr große Oberfläche als äußerst dünner Film verteilt werden, der Eindruck eines trockenen Produktes entsteht.
Im Zuge der neue EG-Richtlinien ist nun auch Lecithin als Emulgator in Speiseeis europaweit zugelassen. Bislang wurden nur Mono- und Diglyceride (E 471) oder auch Eigelb als Emulgatoren eingesetzt.
Mit wachsendem Interesse an natürlichen, pflanzlichen Zusatz-stoffen gewinnt Lecithin als grenzflächenaktive Substanz bei der Speiseeisherstellung immer mehr an Bedeutung.
Die zentrale Fragestellung, die sich in diesem Zusammenhang stellt, ist: „Ist es möglich, Mono-Diglyceride in Speiseeis durch Speziallecithin ohne Qualitätseinbußen zu ersetzen?". Um diese Frage beantworten zu können, haben Überprüfungen von modifizierten Lecithinen im Kombination mit Carrageen, Johannisbrotkernmehl und Guarkernmehl in Eiscreme bereits Erfolge gebracht.
Zur Qualitätsbeurteilung wurden die Kriterien Overrun und Abschmelzverhalten gemessen sowie eine sensorische Auswertung bezüglich Geschmacksmprofil, Textur und Mundgefühl herangezogen.
Als Standardmuster wurde ein Speiseeis mit einem handelsüblichen Stabilisatoren-Emulgatoren-Mix - bestehend aus Mono-Diglyceriden von Speisefettsäuren E 471, Guarkernmehl E 412, Natrium-Carboxylmethylcellulose E 466 und Carrageen E 407 - hergestellt.

Ein herausragend gutes Ergebnis wurde mit einem entölten, enzymatisch hydrolisierten Lecithin mit erhöhtem Lyso-Phospholipidgehalt erzielt. Bei einer Einsatzmenge von nur 0,5 % VP 618-10 im Vergleich zu 1% des handelsüblichen Stabilisatoren-Emulgatoren-Mixes ergaben sich folgende Ergebnisse:

Der Overrun O in % ist definiert als:

$$(0) = \frac{\text{spezifisches Gewicht ungefrorener Mix - spezifisches Gewicht gefrorener Mix}}{\text{spezifisches Gewicht gefrorener Mix}} \times 100$$

Berücksichtigt man die unterschiedlichen Dosierungen und das Fehlen jeglicher Stabilisatoren im Eiscrememix mit einem enzymatisch hydrolisierten Lecithin gemäß der Erfindung, ist der erzielte Overrun von 110% ein hervorragendes Ergebnis. Es ist zu vermuten, dass eine Kombination aus einem enzymatisch hydrolisierten Lecithin gemäß der Erfindung und geringen Mengen eines geeigneten Stabilisators (z.B. Guarkernmehl, Johannisbrotkernmehl und/oder Carrageen) die Aufschlagfähigkeit noch zusätzlich weiter steigert. Das Abschmelzverhalten gibt die Eismenge in mm an, die in einer definierten Zeitspanne abschmilzt. Zu starkes Abschmelzen spricht für einen zu geringen Anteil an Stabilisatoren. Das leicht ungünstigere Abschmelzverhalten des Speiseeises mit einem enzymatisch hydrolisierten Lecithin gemäß der Erfindung ist auf das Fehlen jeglicher Stabilisatoren in dem Mix zu erklären. Auch ist eine Kombination mit einem enzymatisch hydrolisierten Lecithin gemäß der Erfindung und Stabilisator sinnvoll.

Zwar sind auch in der sensorischen Bewertung der Eiscrememuster (Typ Vanille) die Proben, mit dem handelsüblichen Stabilisatoren-Emulgatoren-Mix leicht bevorzugt worden, jedoch waren die Kriterien der Bevorzugung nicht Flavour sondern vielmehr Cremigkeit, Vollmundigkeit, Boddy, d.h. typische Parameter, die durch Einsatz von Stabilisatorensysteme bestimmt werden.

**Patentansprüche**

1.  Verwendung eines entölten enzymatisch hydrolisierten Lecithins mit erhöhten Lyso-Phospholipidgehalt in Speiseeis als Stabilisator und Emulgator mit anderen oder ohne andere Stabilisatoren, insbesondere Guarkernmehl, Johannisbrotmehl und/oder Carrageen.